# EUROPEAN PATENT SPECIFICATION

(11) **EP 0 581 318 B1**
(45) Date of publication and mention of the grant of the patent: **29.10.1997**
(21) Application number: 93112291.5
(22) Date of filing: 30.07.1993
(51) Int. Cl.: B62M 7/04, B62K 11/04

(54) **Frame structure for motorcycle**
Rahmenstruktur für Motorrad
Structure de cadre pour motocyclette

(30) Priority: 31.07.1992 JP 205788/92; 31.07.1992 JP 205080/92
(43) Date of publication of application: 02.02.1994
(73) Proprietor: YAMAHA HATSUDOKI KABUSHIKI KAISHA, Iwata-shi Shizuoka-ken (JP)
(72) Inventor: Akao, Takuya, Iwata-shi, Shizuoka-ken (JP); Aoki, Hiroyuki, Iwata-shi, Shizuoka-ken (JP); Akaike, Toshihiko, Iwata-shi, Shizuoka-ken (JP); Sugiyama, Shigeru, Iwata-shi, Shizuoka-ken (JP); Suzuki, Tatsuya, Iwata-shi, Shizuoka-ken (JP); Taki, Norio, Iwata-shi, Shizuoka-ken (JP)
(74) Representative: Grünecker, Kinkeldey, Stockmair & Schwanhäusser Anwaltssozietät

(56) References cited:
- FR-A- 2 219 050
- FR-A- 2 477 499
- US-A- 4 460 057
- US-A- 5 020 847

## Description

The present invention relates generally to a frame structure for a motorcycle and relates in particular to a suspension structure for a unit swing-type engine of the motorcycle. A further embodiment of the invention relates to specific improvements of the frame structure.

Small scooter-type motorcycles are usually provided with a unit swing-type engine in which the engine and transmission are combined as a unit. The front part of the unit swing-type engine has been conventionally suspended by connecting engine side brackets, which are integral with the crankcase, to right and left pair chassis side brackets attached to the chassis frame through links.

However, a problem that the conventional engine suspension structure has is that the same engine cannot be used for a plurality of models because the engine side brackets are formed integrally with the crankcase of the unit swing-type engine. Another problem with the conventional engine suspension structure is that since rubber bushes for absorbing engine vibration and allowing engine swinging are press-fit in both link side and engine side, a number of parts into which the bushes are press-fit increases. This results in an increased number of assembly processes. Moreover, it is difficult to maintain a high accuracy of press-fitting of the rubber bushes.

Further, in scooter-type motorcycles, a down tube extends obliquely back downward from a head pipe, and a stowing space is provided behind a head pipe to arrange a luggage compartment therein. In conventional structures for scooter-type motorcycles, however, the down tube is connected to a medium height position on the head pipe, and the space behind the head pipe is not large enough to provide a large volume of luggage compartment. In this case, while it may be conceived that the luggage compartment could be extended backward to increase its volume, such a method will make the room for the rider's feet (knees) smaller and detract from riding comfort. Another problem with connecting the down tube to the medium height position on the head pipe is that the part of the down tube located under the luggage compartment is shifted backward and, therefore, the clearance between the leg shield and the external cover located below the seat becomes smaller.

US-A-4,460,057, according to the precharacterizing part of claim 1 discloses a frame structure for a motorcycle (trike) having a swing-type engine. The suspension structure having brackets at the engine side as well as at the chassis side. Links are provided connecting said chassis side brackets to said engine side brackets. The rear frame having said engine side brackets formed separately from, and connectable to, the engine unit.

FR-A-2 477 499 discloses a frame structure for a motorcycle having a suspension structure for an engine unit. Said suspension structure includes a fork member connected to the chassis, an engine side bracket and links connecting said fork member to said engine side brackets. Said engine side brackets are formed at the transmission case supporting said engine unit.

The object of the invention is to provide a suspension structure for a unit swing-type engine usable for a plurality of models. A further object is that the improved suspension structure is capable of reducing the number of assembly processes by limiting the number of parts into which bushes are press-fit to one, and capable of improving the number of parts into which bushes are press-fit to one, and capable of improving the press-fitting accuracy of the bushes.

A still further object of the present invention is to provide a frame structure for motorcycles capable of providing a large stowing space behind the head pipe and, at the same time, providing a wide clearance between the leg shield and the external cover.

To attain the object described above, according to the invention, a frame structure for a motorcycle has a suspension structure including chassis side brackets, engine side brackets, and links connecting said chassis side brackets to said engine side brackets. The engine side brackets are formed separately from, and connectable to, the unit swing-type engine. The frame structure is characterized in that said engine side brackets include a pair of separate brackets connected to the opposite sides of the engine and to a pair of side links connected to said chassis side brackets to allow pivoting about horizontal exits transverse to the frame through the points of connection of the engine side brackets to the links and of the links to the chassis side brackets.

Furthermore bearings and/or bushes may be provided in the areas where the links are connected to both brackets, and are press-fit into the link.

According to the invention, since the engine side brackets are formed separately from the engine, same can be used for different models of motorcycles. Furthermore, since press-fitting of the bush or bearing may be performed to the link part only, the number of assembly processes may be reduced and the accuracy of press-fitting the bush or bearing is improved.

To attain the further subsidiary of the invention, a frame structure has one end of the down tube connected to the lower end of the head pipe by way of a joint extending backward from the head pipe.

According to the embodiment of the invention, since the position of attaching the down tube of the head pipe is the bottom end of the head pipe, the down tube is not located behind the head pipe. As a result, a large stowing space is provided behind the head pipe. Furthermore, since the down tube is connected to the bottom end of the head pipe, the foremost portion of the down tube (the portion extending from the head pipe obliquely back downward) can be shifted forward with respect to the chassis in comparision with conventional structures. As a result, a large space can be provided between the leg shield and the external cover to improve the rider's riding comfort.

Embodiments of the invention will be described below in reference to the attached drawings.
Figure 1 is a partially broken side view of the front portion of the suspension for the unit swing-type engine, according to the invention,
Figure 2 is a cross section along the line A-A of Figure 1,
Figure 3 is an exploded perspective view of the suspension portion,
Figure 4 is a side view of a scooter-type motorcycle,
Figure 5 is a partial plan view of the motorcycle,
Figure 6 is a rear part side view of the suspension portion of the unit swing-type engine, according to the invention
Figure 7 is a side view, partially in cross section, of the frame structure according to a further development of the invention,
Figure 8 is a bottom view of the joint portion of the frame structure,
Figure 9 is an exploded perspective view of the joint portion,
Figure 10 is a side view of a scooter-type motorcycle,
Figure 11 is a partial plan view of the motorcycle shown in Figure 10, and
Figure 12 is a perspective view of a chassis frame of the motorcycle shown in Figure 10.

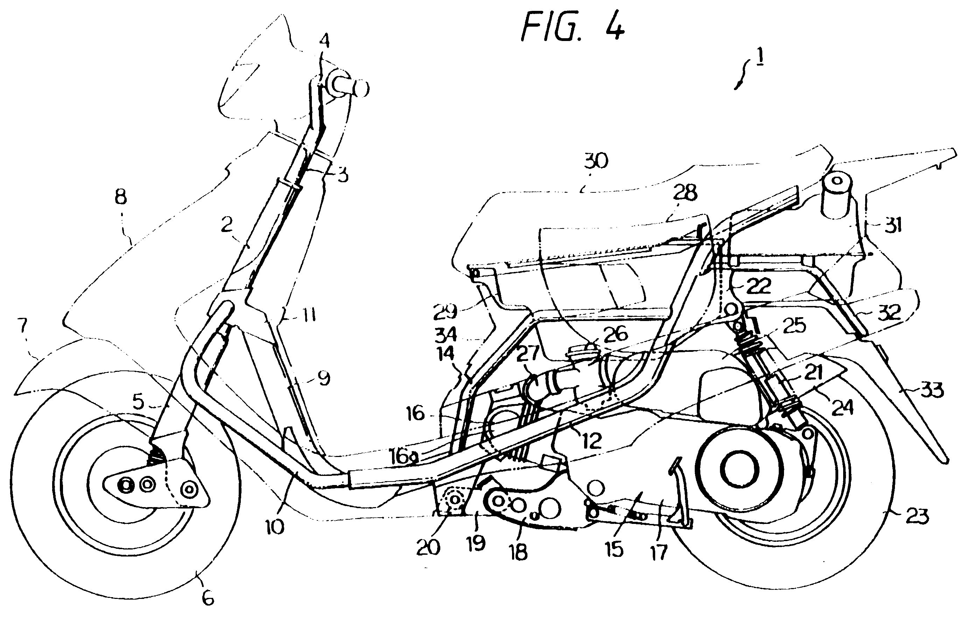

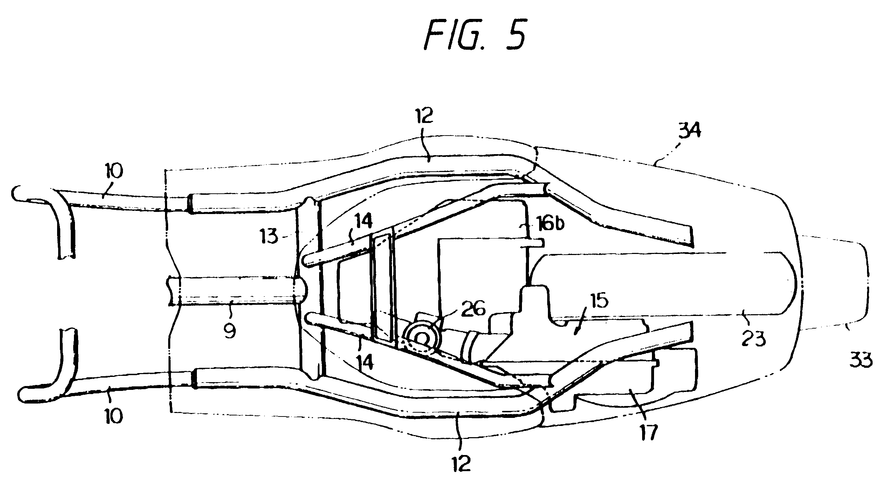

First, the structure of the scooter-type motorcycle is roughly described in reference to Figures 4 and 5.

In Figure 4, a steering shaft 3 is inserted freely rotatably into a head pipe 2. Handlebars 4 are connected to the top of the steering shaft 3. A front wheel 6 is freely rotatably supported by a shaft and connected to the lower part of the head pipe 2 by way of a front suspension unit 5. A front fender 7 and a front cowl 8 are also shown in Figure 4.

A down tube 9 and two side tubes 10 extend back downward from the lower part of the head pipe 2.

Namely, the down tube 9 is located in the center of the vehicle width with its one (front) end inserted into, and welded to, a joint 11 connected to the lower part of the head pipe 2. The down tube 9, as shown in Figure 5, extends back downward from joint 11 with its rear end connected to the center (with respect to the vehicle width) of a cross pipe 13 which will be described later.

The two side tubes 10 are arranged on both sides of the down tube 9 with one (front) end of them inserted into and welded to the sides of the joint 11. Each of the side tubes 10 extends generally horizontally outward from the joint 11, then is bent about 90 degrees downward to extend obliquely forward, is bent again about 90 degrees to extend obliquely back downward, is bent by an obtuse angle to extend obliquely back upward, and its rear end is inserted into, and welded to, the front end of a main frame 12.

The right and left paired main frames 12 extend obliquely back upward, are bent to rise up steeply, and are bent again to extend obliquely back upward. As shown in Figure 5, the cross pipe 13 is placed laterally between the main frames 12. Sub-frames 14 are arranged between the cross pipe 13 and the main frames 12.

A motorcycle 1 is provided with a unit swing-type engine 15 as a drive power source. An engine unit 16 of the unit swing-type engine 15 has a cylinder 16a tilted almost horizontally and a crankcase 16b. A transmission case 17 is formed integrally with one side of the crankcase 16b. One end of the unit swing-type engine 15 is connected to, and suspended by, body side brackets 20 connected to the cross pipe 13 by way of right and left paired engine side brackets 18 connected to the front lower end of the crankcase 16b, and links 19 pivoted to the brackets 18. The other (rear) end of the unit swing-type engine 15 is connected to, and suspended by, a bracket 22 connected to the main frame 12 by way of a rear suspension unit 21.

A rear wheel 23 is connected to an output shaft (rear axle) (not shown) extending horizontally from the rear part of the transmission case 17 of the unit swing-type engine 15. The upper part of the rear wheel 23 is covered with a rear fender 24.

An air cleaner 25 is located on one side of the rear fender 24 and above the transmission case 17 of the unit swing-type engine 15. The air cleaner 25 is connected to a carburetor 26 which, in turn, is connected by way of a suction tube 27 to the suction side of the cylinder 16a.

As shown in Figure 4, a luggage box 29 for stowing a crash helmet 28, a seat 30, and a fuel tank 31 are located above the unit swing-type engine 15. The fuel tank 31 is attached to a rectangular support frame 32, extending backward from the main frames 12. A license bracket 33 is located below the fuel tank 31. The area below the set is covered with an external cover 34.

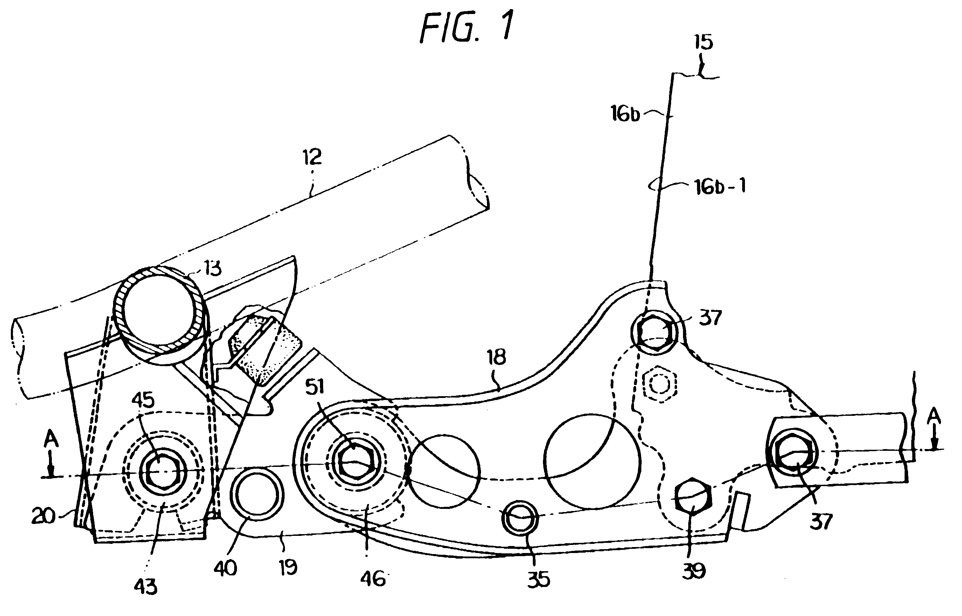

The suspension structure for the unit swing-type engine 15 according to the invention is described in detail below with reference to Figures 1 through 3.

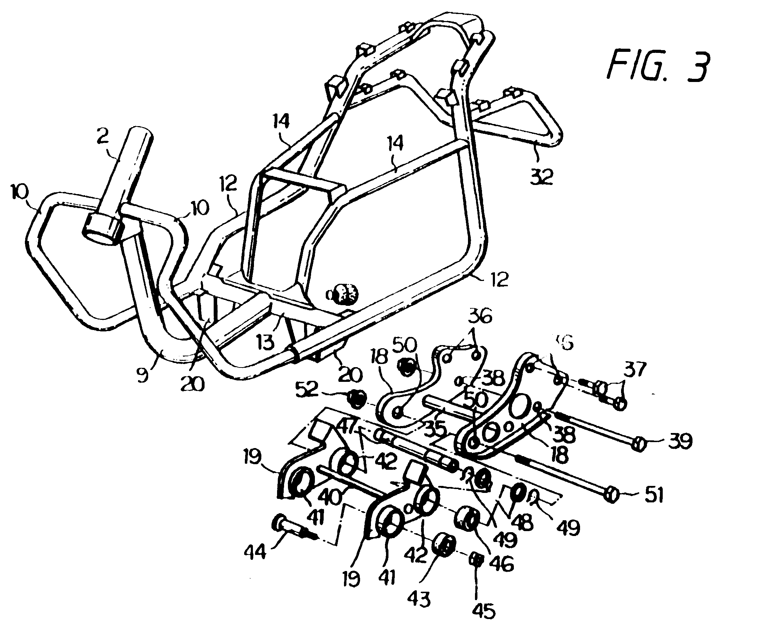

The paired engine side brackets 18 are formed separately from the unit swing-type engine 15 and located right and left, one for each side, as shown in Figure 3. Both brackets 18 are united together with a pipe 35. As shown in Figure 3, both engine side brackets 18 are connected to the front lower part of the transmission case 17 of the unit swing-type engine 15 by means of two bolts 37 inserted through bolt holes 36 and a long sized through bolt 39 inserted through a bolt hole 38. An exhaust pipe (not shown) extending out from the cylinder 16a passes through between the right and left paired engine side brackets 18, and is protected by the engine side brackets 18.

As shown in Figure 3, the links 19 are located right and left as a pair and united together with a pipe 40. Cylindrical bosses 41 and 42 are connected to the front and rear ends of each of the links 19.

The paired right and left brackets 20 are connected to the underside of the cross pipe 13 located laterally between the paired right and left main frames 12.

The links 19 are connected to the chassis side brackets 20 and engine side brackets 18 by means of a structure described below.

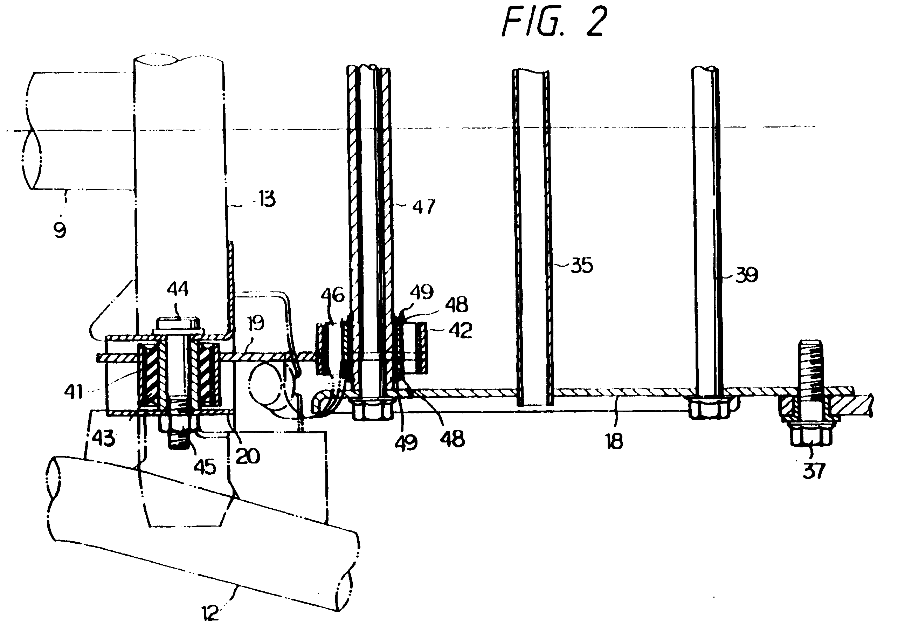

Namely, a rubber bush 43 is press-fit into the boss 41 connected to the front end of each of the links 19. The front end of each of the links 19 is fit into the chassis side bracket 20 as shown in Figure 2 and connected to, and freely rotatably supported by, the chassis side bracket 20 by means of a bolt 44 passed from inside toward outside of the chassis through the chassis side bracket 20 and the rubber bush 43, and a nut 45 screwed on to the bolt 44. The rubber bush 43 comprises inner and outer metallic tubes and annular rubber bake bonded between the tubes, and attached to the link 19 when the outer metallic tube is press-fit into the boss 41.

A bearing 46 is press-fit into the boss 42 connected to the rear part of the link 19. A sleeve 47 is inserted through the press fit bearing 46 and located between the engine side brackets 18. The rear end (bearing 46) of the link 19 is placed in a predetermined position by means of washers 48 in contact with both sides of the bearing and snap rings 49 fit to the sleeve 47.

The rear end of each of the links 19 is connected to, and freely rotatably supported by, the engine side bracket 18 by means of a bolt hole 50, a long sized through bolt 51 passing through the sleeve 47, and a nut 52 screwed onto the bolt 51.

In the structure for suspending the front part of the unit swing-type engine 15 to the chassis as described above, since the chassis side brackets 20 can be attached to arbitrary positions on the cross pipe horizontally placed between the paired main frames 12, the width of the link 19 with its one (front) end connected to the chassis side bracket 20 can be arbitrarily chosen, irrespective of the distance (width) between the main frames 12. As a result, components laid out around the links 19 are allowed to have more freedom of positioning so that the same components can be used for different models of motorcycles.

Since the engine side bracket 18 is formed separately from the unit swing-type engine 15, and connected to the crankcase 16, the same unit swing-type engine 15 can be used for different models of motorcycles by using different sizes of the bracket 18. This is advantageous for production costs. Another advantage is that the machining of the surface 16b-1, facing the cylinder 16a of the crankcase 16b, is simplified.

In this embodiment, since press-fit parts are limited to the links 19 into which both rubber bush 43 and bearing 46 are press-fit, the number of assembly processes for the rubber bush 43 and the bearing 46 is reduced. As a result, accuracy of press-fitting these parts into the links 19 is improved.

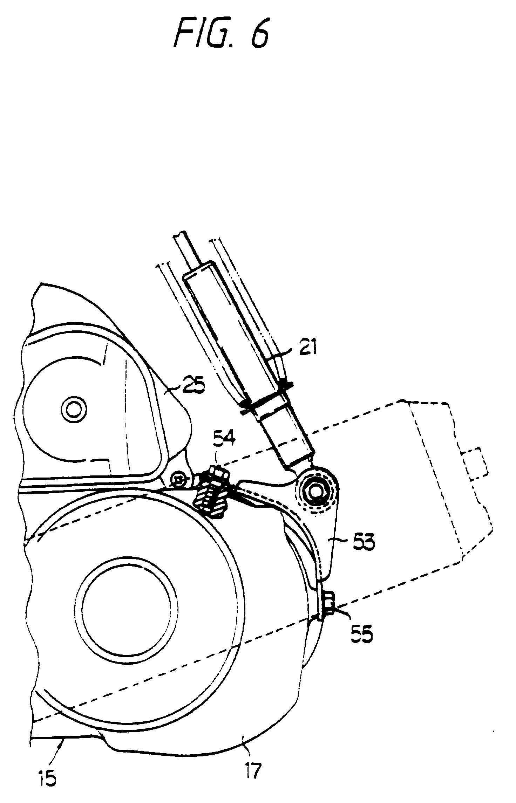

In this embodiment, as shown in Figure 6, the rear suspension unit 21 is attached to the transmission case 17 by means of a bracket 53 which is a separate part from the transmission case 17 In this embodiment, the bracket 53 is made of sheet metal and attached to the rear end upper part of the transmission case 17 by means of bolts 54 and 55. The lower end of the rear suspension unit 21 is freely rotatably attached to the bracket 53.

By constituting the bracket 53 separate from the transmission case 17 as described above, the attachment position of the rear suspension unit 21 can be optimized when the same unit swing-type engine is used for different models of motorcycles of different dimensions by replacing the bracket 53.

While the engine suspension structure of this embodiment is described above for the case in which the rubber bush 43 and the bearing 46 are inserted into the links 19, the same effect is attained by using a bearing in place of the rubber bush.

As is clear from the description above, according to this embodiment of the invention, since the front part of the unit swing-type engine is suspended by attaching the chassis side brackets to the chassis frame of the motorcycle provided with the unit swing-type engine, and attaching the engine side brackets which are separate pieces from the engine to the front part of the unit swing-type engine, effects are attained that the number of press-fit parts is reduced to one to reduce the number of assembly processes, and that the press-fit accuracy of the bush or bearing is improved.

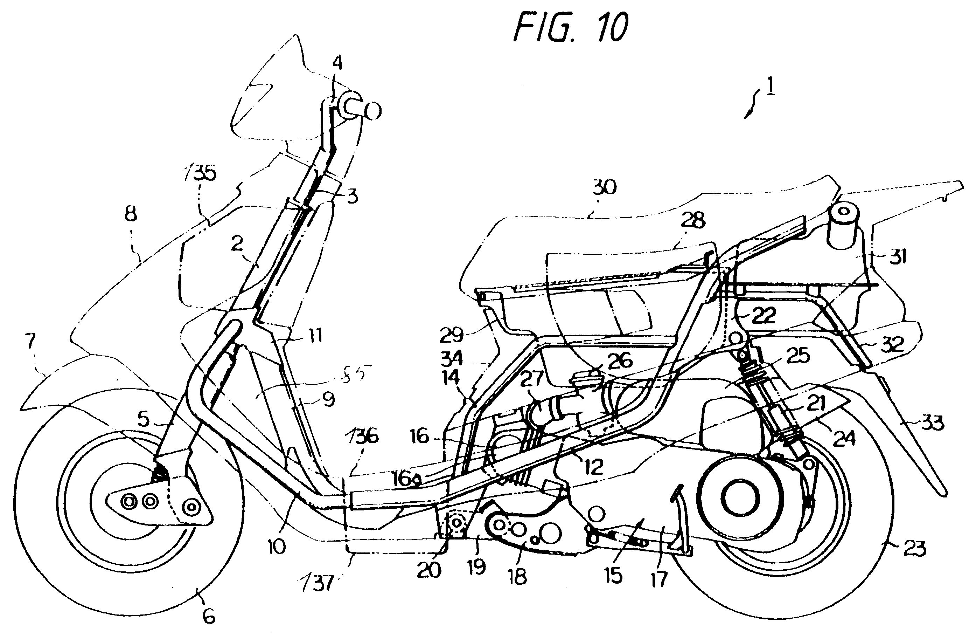

The structure of the scooter-type motorcycle of a further embodiment is roughly described in reference to Figures 10 through 12.

In Figure 10, a steering shaft 3 is freely rotatably inserted in a head pipe 2. Handlebars 4 are attached to the upper part of the steering shaft 3. A front wheel 6 is supported freely rotatably below the head pipe 2 by way of a front suspension unit 5. A front fender 7 and a front cowl 8 are also shown in Figure 10. A luggage compartment 135 is provided around the head pipe 2 and within the front cowl 8.

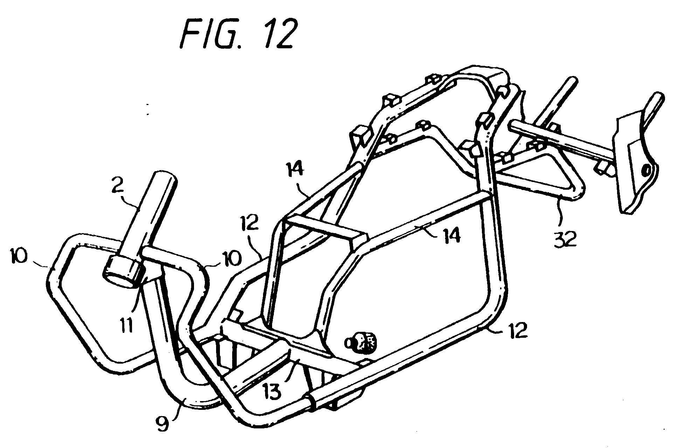

As also shown in Figure 12, a joint 11, which is a separate piece from the head pipe 2, fits over the bottom end of the head pipe 2. From the joint 11, a down tube 9 and two side tubes 10 extend back downward . Mainframes 12 are connected to the side tubes 10.

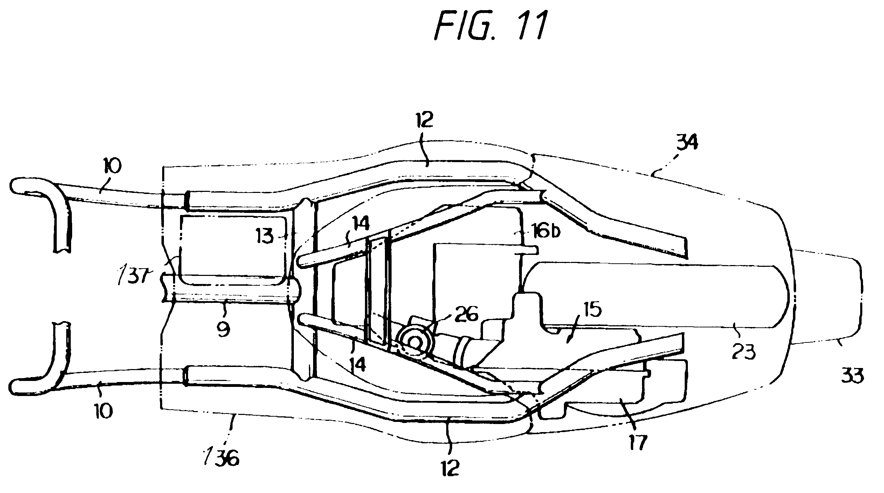

Each of the right and left paired main frames 12 extends obliquely back upward, is bent to rise up steeply, and is bent again to extend obliquely back upward. As shown in Figures 11 and 12, a cross pipe 13 is placed between the main frames 12. Side tubes 14 for reinforcement are arranged between the cross pipe 13 and the main frames 12.

In this embodiment, as shown in Figures 10 and 11, a low floor-type foot board 136 is provided with an integral battery compartment 137 opening upward. The battery compartment 137 is formed in front of the cross pipe 13 and between one of the main frames 12 and the down tube 9. A battery is placed in the battery compartment 137. The opening is covered with a lid and a mat is placed over the lid.

The motorcycle 1 is provided with a 4-cycle unit swing-type engine 15. The engine unit 16 of the unit swing-type engine 15 has an almost horizontally-tilted cylinder 16a and a crankcase 16b. A transmission case 17 is formed integrally with one side of the crankcase 16b. One end of the unit swing-type engine 15 is connected to, and suspended by, chassis side brackets 20 connected to the cross pipe 13 by way of engine side brackets 18 paired on right and left sides and connected to the front lower parts of the crankcase 16b, and links 19 pivoted on the brackets 18. The other (rear) end of the unit swing-type engine 15 is connected to, and suspended by, a bracket 22 connected to the main frame 12 by way of a rear suspension unit 21.

A rear wheel 23 is connected to an output shaft (rear axle) (not shown) extending horizontally from inside toward outside of the rear part of the transmission case 17 of the unit swing-type engine 15. The upper part of the rear wheel 23 is covered with a rear fender 24.

An air cleaner 25 is located above the transmission case 17 of the unit swing-type engine 15, and on one side of the rear fender 24. The air cleaner 25 is connected to a carburetor 26 which, in turn, is connected to the intake side of the cylinder 16a by way of an intake tube 27.

As shown in Figure 10, a luggage box 29 for stowing a crash helmet 28, a seat 30, and a fuel tank 31 is located above the unit swing-type engine 15. The fuel tank 31 is mounted on a rectangular support frame 32 extending backward from the main frames 12. A license plate 33 is attached below the fuel tank 31. The area below the seat 30 is covered with an external cover 34.

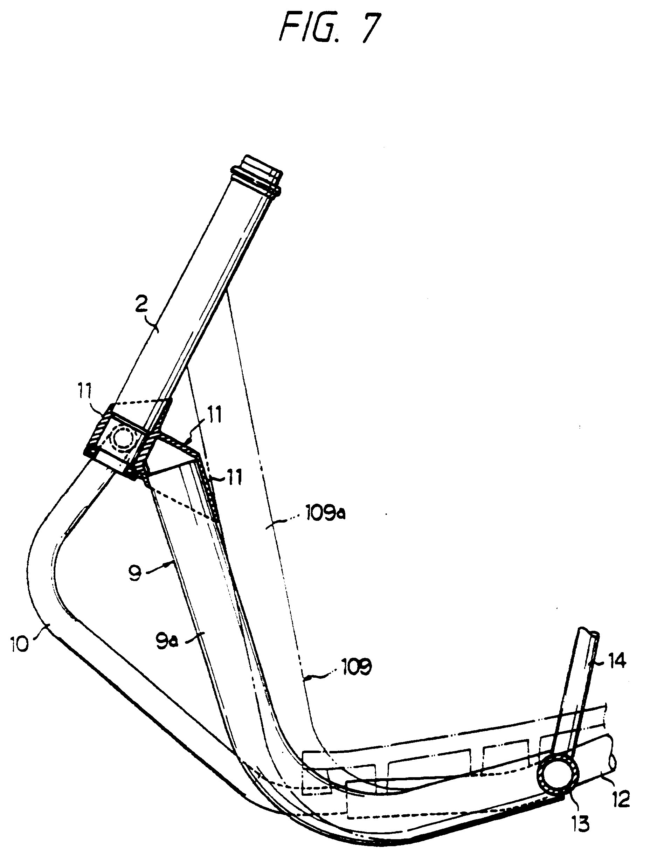

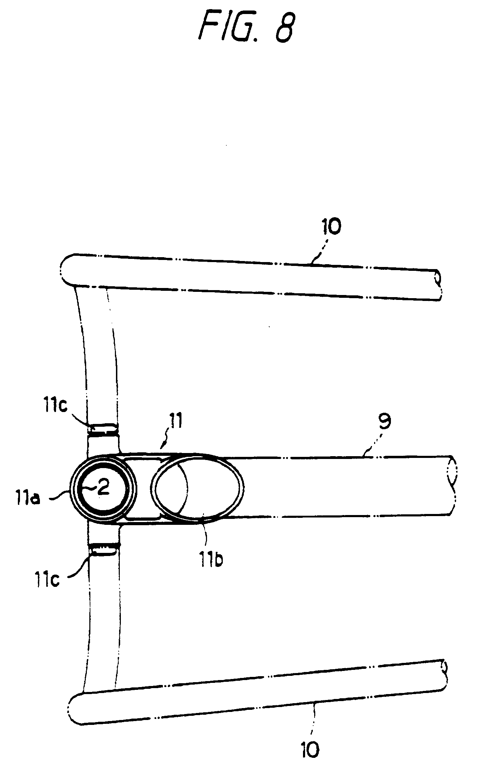

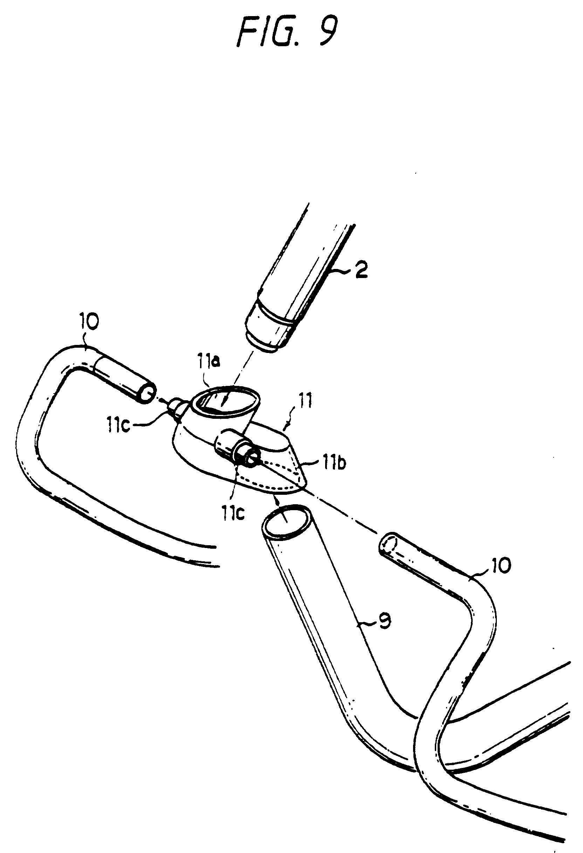

Here, the structure of connecting the down tube 9 and the side tubes 10 to the head pipe 2 is described in reference to Figures 7 through 9.

As for the joint 11, its cylindrical portion 11a is placed over and welded to the outer circumference of the bottom end of the head pipe 2, and one (front) end of the down tube 9 is inserted from under into and welded to the insertion portion 11b extending backward from the cylindrical portion 11a. The down tube 9 extends obliquely back downward from the joint 11, and its rear end is connected to the center (with respect to the vehicle width) of the cross pipe 13, as shown in Figures 11 and 12.

The two side tubes 10 are arranged on both sides of the down tube 9 and each one (front) end of them is inserted in, and welded to, a pipe 11c erected on either side of the joint 11. Each of the side tubes 10 extends from the joint 11 generally horizontally outward, is bent about 90 degress to extend obliquely down forward, is bent again about 90 degrees to extend obliquely down backward, and is bent by an obtuse angle to extend obliquely back upward, with its rear end inserted into and secured to the front end of the main frame 12.

In this embodiment, as described above, since the down tube 9 is connected to the bottom end of the head pipe 2, unlike the conventional down tube 109 shown in Figure 7 with dash-and-double-dotted lines (connected to the medium height position on the head pipe 2), the down tube 9 of this embodiment is not located behind the head pipe 2, and a large space is provided in the luggage compartment 35.

When the down tube 9 is connected to the bottom end of the head pipe 2 as described above, the foremost part 9a of the down tube 9 (the portion extending from the head pipe 2 obliquely back downward) can be shifted more forward with respect to the chassis frame than the foremost part 109a of the conventional down tube 109. As a result, a larger space is provided between a leg shield 85 and an external cover 34 (both shown in Figure 10) arranged around the down tube 9.

As is clear from the description above, according to this embodiment of the invention, in the frame structure of motorcycles provided with the down tube extending from the head pipe obliquely back downward, since one end of the down tube is connected to the bottom end of the head pipe by way of a joint extending from the head pipe, effects are attained that a large space is provided behind the head pipe, and a large space is provided between the leg shield and the external cover.

## Claims

1. Frame structure for a motorcycle having a suspension structure for a unit swing-type engine (15), said suspension structure includes chassis side brackets (20), engine side brackets (18) and links (19), connecting said chassis side brackets (20) to said engine side brackets (18),
said engine side brackets (18) are formed separately from, and connectable to, the swing-type engine (15).
**characterized in that**
said engine side brackets (18) include a pair of separate brackets (18,18) connected to the opposite sides of the engine (15) and to a pair of side links (19,19) connected to said chassis side brackets (20) to allow pivoting about horizontal axes transverse to the frame through the points of connection of the engine side brackets (18) to the links (19) and of the links (19) to the chassis side brackets (20).

2. Frame structure according to claim 1, **characterized in that** sais pair of engine side brackets (18,18) are connected to each other by means of a pipe (35) to form one unit.

3. Frame structure according to claim 1 or 2, **charaterized in that** said pair of links (19,19) are connected to each other by means of a pipe (40) to form one unit.

4. Frame structure according to at least one of claims 1 to 3, **characterized in that** said engine side brackets (18) are connected to the front lower part of a transmission case (17) of the unit swing-type engine (15) by means of two bolts (37) inserted through bolt holes (36) and a long-sized through bolt (39) inserted through a bolt hole (38).

5. Frame structure according to at least one of claims 1 to 4, **characterized in that** joint portions of the links (19) include a bearing, where at least one of the engine side brackets (18) and the chassis side brackets (20) are connected to the links (19)

6. Frame structure according to at least one of claims 1 to 5, **characterized in that** joint portions of the links (19) include a resilient bush, where at least one of the engine side brackets and the chassis side brackets (20) are connected to the links (19).

7. Frame structure according to at least one of claims 1 to 6, **characterized in that** said bearing (46) and/or the brush (43) are press-fitted into said links (19).

8. Frame structure according to at least one of claims 1 to 7, **characterized in that** cylindrical bosses (41,42) are connected to the front and rear ends, respectively, of each of the links (19).

9. Frame structure according to claim 8, **characterized in that** a rubber bush (43) is press-fit into one (41) of the bosses (41,42) connected to the front end of each of the links (19), the front end of each of the links (19) is fit into the chassis side bracket (20) and connected to, and freely rotatably supported by, the chassis side bracket (20) by means of a bolt (44) passed from inside toward outside of the chassis through the chassis side bracket (20) at the rubber bush (43) and a nut (45) screwed onto the bolt (44), said rubber bush (43) comprises inner and outer metallic tubes and annular rubber bakebonded between the tubes, and attached to the link (19) when the outer metallic tube is press-fit into the boss (41).

10. Frame structure according to claim 8 or 9, **characterized in that** a ball bearing is press-fit into the other (42) of the bosses (42,41) connected to the rear part of the link (19), a sleeve (47) is inserted through the press-fit bearing (46) and located between the engine side brackets (18), wherein the rear end of the link (19) is placed in a predetermined position by means of washers (48) in contact with both sides of the bearing (46) and snap rings (49) fit to the sleeve (47), said rear end of each of the links (19) is connected to, and freely rotatably supported by, the engine side bracket (18) by means of a bolt hole (50), a long-sized through bolt (51) passing through the sleeve, and a nut (52) screwed onto the bolt (51).

11. Frame structure according to at least one of the claims 1 to 10, **characterized in that** each of said chassis side brackets (20) is connected to the underside of a cross pipe (13) located laterally between paired right and left main frames (12).

12. Frame structure according to at least one of claims 1 to 11, **characterized in that** a rear suspension unit (21) is attached to the transmission case (17) of the unit swing-type engine (15) by means of a bracket (53) which is formed separately from, and connectable to, the transmission case (17).

13. Frame structure according to claim 12, **characterized in that** the bracket (53) is made of sheet metal and attached to the rear end upper part of the transmission case (17) by means of bolts (54,55) so that the lower end of the rear suspension unit (21) is freely rotatably attached to the bracket (53).

14. Frame structure according to at least one of claims 1 to 13, **characterized by** a down tube (9) extending obliquely back downward from a head pipe (2), wherein said down tube (9) is connected to a lower end of said head pipe (9) by way of a joint (11) extending backward from the head pipe (2).

15. Frame structure according to claim 14, **characterized in that** a cylindrical portion (11a) of said joint (11) is placed over and welded to the outer circumference of the bottom end of the head pipe(2), and that one end of the down tube (9) is inserted from under into, and welded to, an insertion portion (11b) of said joint (11) extending backward from the cylindrical portion (11a).

16. Frame structure according to claim 14 or 15, **characterized in that** two side tubes (10) are arranged on both sides of the down tube (9), wherein one end respectively of them is inserted in and welded to a pipe (11c) erected on either side of said joint (11), each of said side tubes (10) extends from said joint (11) generally horizontally outward, is bent about 90 degrees to extend obliquely down forward, is bent again about 90 degrees to extend obliquely backward, and bent by an obtuse angle to extend obliquely back upward, with its rear end inserted into, and secured to, a front end of a main frame (12).

## Patentansprüche

1. Rahmenkonstruktion für ein Motorrad, das eine Aufhängungskonstruktion für einen Pendeleinheit-Motor (15) aufweist, wobei die Aufhängungskonstruktion chassisseitige Halterungen (20), motorseitige Halterungen (18) und Verbindungsglieder (19) einschließt, die die chassisseitigen Halterungen (20) mit den motorseitigen Halterungen (18) verbinden,
wobei die motorseitigen Halterungen (18) separat von und verbindbar mit dem Pendel-Motor (15) ausgebildet sind,
**dadurch gekennzeichnet,** daß
die motorseitigen Halterungen (18) ein Paar separate Halterungen (18, 18) einschließen, die mit den gegenüberliegenden Seiten des Motors (15) verbunden sind und mit einem Paar Seitenverbindungsgliedern (19, 19) verbunden sind, die mit den chassisseitigen Halterungen (20) verbunden sind, um eine Verschwenkung um horizontale Achsen quer zu dem Rahmen über die Verbindungspunkte der motorseitigen Halterungen (18) mit den Verbindungsgliedern (19) und der Verbindungsglieder (19) mit den chassisseitigen Halterungen (20) zu ermöglichen.

2. Rahmenkonstruktion gemäß Anspruch 1, **dadurch gekennzeichnet,** daß das Paar der motorseitigen Halterungen (18, 18) miteinander mittels eines Rohres (35) verbunden ist, um eine Einheit zu bilden.

3. Rahmenkonstruktion nach Anspruch 1 oder 2, **dadurch gekennzeichnet,** daß das Paar der Verbindungsglieder (19, 19) miteinander mittels eines Rohrs (40) verbunden ist, um eine Einheit zu bilden.

4. Rahmenkonstruktion nach zumindest einem der Ansprüche 1 bis 3, **dadurch gekennzeichnet,** daß die motorseitigen Halterungen (18) mit dem vorderen unteren Teil eines Getriebegehäuses (17) des Pendeleinheit-Motors (15) mittels zweier Schrauben (37) verbunden sind, die durch Schraubenlöcher (36) eingesetzt sind, und mittels einer langen Durchgangsschraube (39) verbunden sind, die durch ein Schraubenloch (38) eingesetzt ist.

5. Rahmenkonstruktion nach zumindest einem der Ansprüche 1 bis 4, **dadurch gekennzeichnet,** daß Verbindungsbereiche der Verbindungsglieder (19) ein Lager einschließen, wobei zumindest eine der motorseitigen Halterungen (18) und der chassisseitigen Halterungen (20) mit den Verbindungsgliedern (19) verbunden ist.

6. Rahmenkonstruktion nach zumindest einem der Ansprüche 1 bis 5, **dadurch gekennzeichnet,** daß Verbindungsbereiche der Verbindungsglieder (19) eine elastische Buchse einschließen, wobei zumindest eine der motorseitigen Halterungen und der chassisseitigen Halterungen (20) mit den Verbindungsgliedern (19) verbunden ist.

7. Rahmenkonstruktion nach zumindest einem der Ansprüche 1 bis 6, **dadurch gekennzeichnet,** daß das Lager (46) und/oder die Buchse (43) in die Verbindungsglieder (19) pressgepaßt sind.

8. Rahmenkonstruktion nach zumindest einem der Ansprüche 1 bis 7, **dadurch gekennzeichnet,** daß zylindrische Naben (41, 42) jeweils mit dem vorderen und hinteren Ende jeder der Verbindungsglieder (19) verbunden sind.

9. Rahmenkonstruktion nach Anspruch 8, **dadurch gekennzeichnet,** daß eine Gummibuchse (43) in eine (41) der Naben (41, 42) pressgepaßt ist, die mit dem vorderen Ende jeder der Verbindungsglieder (19) verbunden ist, wobei das vordere Ende jeder der Verbindungsglieder (19) in die chassisseitige Halterung (20) eingepaßt und mit dieser verbunden ist und frei drehbar durch die chassisseitige Halterung (20) mittels einer Schraube (44) gehalten wird, die von der Innenseite zur Außenseite des Chassis durch die chassisseitige Halterung (20) an der Gummibuchse (43) hindurchtritt und wobei eine Mutter (45) auf die Schraube (44) aufgeschraubt ist, wobei die Gummibuchse (43) innere und äußere Metallrohre und ein ringförmiges Gummi, das zwischen die Rohre thermisch geklebt ist, umfaßt, und mit dem Verbindungsglied (19) befestigt ist, wenn das äußere Metallrohr in die Nabe (41) pressgepaßt ist.

10. Rahmenkonstruktion nach Anspruch 8 oder 9, **dadurch gekennzeichnet,** daß ein Kugellager in die andere (42) der Naben (42, 41), die mit dem hinteren Teil des Verbindungsgliedes (19) verbunden ist, pressgepaßt ist, daß eine Hülse (47) durch das pressgepaßte Lager (46) eingesetzt ist und zwischen den motorseitigen Halterungen (18) angeordnet ist, wobei das hintere Ende des Verbindungsgliedes (19) in einer vorbestimmten Position mittels Unterlegscheiben (48) in Kontakt mit beiden Seiten des Lagers (46) und Sprengringen (49), die auf die Hülse (47) gepaßt sind, positioniert ist, wobei das hintere Ende jeder der Verbindungsglieder (19) mit der motorseitigen Halterung (18) frei drehbar gestützt wird mittels eines Schraubenloches (50), einer langen Durchgangsschraube (51), die durch die Hülse hindurchtritt, und einer Mutter (52), die auf die Schraube (51) aufgeschraubt ist.

11. Rahmenkonstruktion nach zumindest einem der Ansprüche 1 bis 10, **dadurch gekennzeichnet,** daß jede der chassisseitigen Halterungen (20) mit der Unterseite eines Querrohrs (13) verbunden ist, das quer zwischen den paarweise angeordneten rechten und linken Hauptrahmen (12) angeordnet ist.

12. Rahmenkonstruktion nach zumindest einem der Ansprüche 1 bis 11, **dadurch gekennzeichnet,** daß eine hintere Aufhängungseinheit (21) mit dem Getriebegehäuse (17) des Pendeleinheit-Motors (15) mittels einer Halterung (53) befestigt ist, die separat von und verbindbar mit dem Getriebegehäuse (17) ausgebildet ist.

13. Rahmenkonstruktion nach Anspruch 12, **dadurch gekennzeichnet,** daß die Halterung (53) aus Blech hergestellt ist und mit dem hinteren oberen Teil des Getriebegehäuses (17) mittels Schrauben (54, 55) befestigt ist, so daß das untere Ende der hinteren Aufhängungseinheit (21) frei drehbar mit der Halterung (53) befestigt ist.

14. Rahmenkonstruktion nach zumindest einem der Ansprüche 1 bis 13, **gekennzeichnet durch** ein Abwärtsrohr (9), das sich schräg nach hinten abwärts von einem Kopfrohr (9) erstreckt, wobei das Abwärtsrohr (9) mit einem unteren Ende des Kopfrohres (9) mittels einer Verbindungsstelle (11) verbunden ist, die sich rückwärts von dem Kopfrohr (2) erstreckt.

15. Rahmenkonstruktion nach Anspruch 14, **dadurch gekennzeichnet,** daß ein zylindrischer Bereich (11a) der Verbindungsstelle (11) über den Außenumfang des unteren Endes des Kopfrohres (2) positioniert und mit diesem verschweißt ist, und daß ein Ende des Abwärtsrohrs (9) von unten in einen Einsetzbereich (11b) der Verbindungsstelle (11) eingesetzt und mit diesem verschweißt ist, die sich rückwärts von dem zylindrischen Bereich (11a) erstreckt.

16. Rahmenkonstruktion nach Anspruch 14 oder 15, **dadurch gekennzeichnet,** daß zwei Seitenrohre (10) auf beiden Seiten des Abwärtsrohres (9) angeordnet sind, wobei ein Ende jeweils von diesem in ein Rohr (11c) eingesetzt und mit diesem verschweißt ist, das auf jeder Seite der Verbindungsstelle (11) aufgerichtet ist, wobei jedes der Verbindungsrohre (10) sich von der Verbindungsstelle (11) im allgemeinen horizontal nach außen erstreckt, um etwa 90° so gebogen ist, daß es sich schräg nach unten vorwärts erstreckt, wiederum um etwa 90° gebogen ist, daß es sich schräg rückwärts erstreckt, und um einen stumpfen Winkel gebogen ist, daß es sich schräg nach hinten aufwärts erstreckt, wobei dessen hinteres Ende in ein vorderes Ende eines Hauptrahmens (12) eingesetzt und mit diesem verbunden ist.

## Revendications

1. Structure de cadre pour motocyclette pourvue d'une structure de suspension pour un moteur (15) unitaire de type basculant, ladite structure de suspension comportant des supports latéraux (20) de châssis, des supports latéraux (18) de moteur et des pièces de liaison (19) reliant lesdits suppports latéraux (20) de châssis auxdits supports latéraux (18) de moteur,
lesdits supports latéraux (18) de moteur étant formés séparément du moteur (15) de type basculant et pouvant lui être reliés,
caractérisée en ce que
lesdits supports latéraux (18) de moteur comportent une paire de supports séparés (18, 18) reliés aux côtés opposés du moteur (15) et à une paire de pièces de liaison latérales (19, 19) reliées auxdits supports latéraux (20) de châssis pour permettre un pivotement autour d'axes horizontaux transversaux au cadre à travers les points de liaison des supports latéraux (18) du moteur sur les pièces de liaison (19) et des pièces de liaison (19) sur les supports latéraux (20) de châssis.

2. Structure de cadre selon la revendication 1, caractérisée en ce que lesdits deux supports latéraux (18, 18) de moteur sont reliés l'un à l'autre au moyen d'un tube (35) pour former une unité.

3. Structure de cadre selon la revendication 1 ou 2, caractérisée en ce que lesdites deux pièces de liaison (19, 19) sont reliées l'une à l'autre au moyen d'un tube (40) pour former une unité.

4. Structure de cadre selon l'une au moins des revendications 1 à 3, caractérisée en ce que lesdits supports latéraux (18) de moteur sont reliés à la partie inférieure avant d'un carter (17) de transmission du moteur (15) de type basculant au moyen de deux boulons (37) insérés dans des trous (36) de boulons et un boulon (39) traversant de grande longueur inséré dans un trou (38) de boulon.

5. Structure de cadre selon l'une au moins des revendications 1 à 4, caractérisée en ce que des parties de jonction des pièces de liaison (19) comportent un palier, où au moins l'un des supports latéraux (18) de moteur et des supports latéraux (20) de châssis sont reliés aux pièces de liaison (19).

6. Structure selon l'une au moins des revendications 1 à 5, caractérisée en ce que les parties de jonction des pièces de liaison (19) comportent une douille élastique, où au moins l'un des supports latéraux de moteur et des supports latéraux (20) de châssis sont reliés aux pièces de liaison (19).

7. Structure de cadre selon l'une au moins des revendications 1 à 6, caractérisée en ce que ledit palier (46) et/ou la douille (43) sont ajustés serrés dans lesdites pièces de liaison (19).

8. Structure de cadre selon l'une au moins des revendications 1 à 7, caractérisée en ce que des bossages cylindriques (41, 42) sont reliés respectivement aux extrémités avant et arrière de chacune des pièces de liaison (19).

9. Structure de cadre selon la revendication 8, caractérisée en ce qu'une douille en caoutchouc (43) est ajustée serrée dans l'un (41) des bossages (41, 42) relié à l'extrémité avant de chacune des pièces de liaison (19), l'extrémité avant de chacune des pièces de liaison (19) est ajustée dans le support latéral (20) de châssis et reliée au support latéral (20) de châssis, et supportée par lui en pouvant tourner librement, au moyen d'un boulon (44) passé de l'intérieur vers l'extérieur du châssis à travers le support latéral (20) de châssis par la douille en caoutchouc (43) et un écrou (45) vissé sur le boulon (44), ladite douille en caoutchouc (43) comporte des tubes métalliques intérieur et extérieur et un caoutchouc annulaire collé par cuisson entre les tubes, et fixé à la pièce de liaison (19) lorsque le tube métallique extérieur est ajusté serré dans le bossage (41).

10. Structure de cadre selon la revendication 8 ou 9, caractérisée en ce qu'un palier est ajusté serré dans l'autre (42) des bossages (42, 41) relié à la partie arrière de la pièce de liaison (19), un manchon (47) est inséré à travers le palier (46) ajusté serré et situé entre les supports latéraux (18) de moteur, l'extrémité arrière de la pièce de liaison (19) étant placée dans une position prédéterminée au moyen de rondelles (48) en contact avec les deux côtés du palier (46) et des anneaux élastiques (49) s'adaptant au manchon (47), ladite extrémité arrière de chacune des pièces de liaison (19) étant reliée au support latéral (18) de moteur, et supportée par lui en pouvant tourner librement, au moyen d'un trou (50) de boulon, un boulon (51) traversant de grande longueur passant dans le manchon, et un écrou (52) vissé sur le boulon (51).

11. Structure de cadre selon l'une au moins des revendications 1 à 10, caractérisée en ce que chacun des supports latéraux (20) de châssis est relié au côté inférieur d'un tube transversal (13) situé latéralement entre des cadres principaux appariés (12) droit et gauche.

12. Structure de cadre selon l'une au moins des revendications 1 à 11, caractérisée en ce qu'une unité de suspension arrière (21) est fixée au carter de transmission (17) du moteur (15) de type basculant et unitaire au moyen d'un support (53) formé séparément du carter de transmission (17) et pouvant lui être relié.

13. Structure de cadre selon la revendication 12, caractérisée en ce que le support (53) est fait d'une tôle et fixé à la partie supérieure de l'extrémité arrière du carter de transmission (17) au moyen de boulons (54, 55) de telle manière que l'extrémité inférieure de l'unité de suspension arrière (21) est fixée au support (53) en pouvant tourner librement.

14. Structure de cadre selon l'une au moins des revendications 1 à 13, caractérisée par un tube inférieur (9) s'étendant obliquement en arrière vers le bas à partir d'un tube de tête (2), ledit tube inférieur (9) étant relié à une extrémité inférieure dudit tube de tête (9) au moyen d'un joint (11) s'étendant vers l'arrière à partir du tube de tête (2).

15. Structure de cadre selon la revendication 14, caractérisée en ce qu'une partie cylindrique (11a) dudit joint (11) est placée sur et soudée à la circonférence extérieure de l'extrémité inférieure du tube de tête (2), et en ce qu'une extrémité du tube inférieur (9) est insérée de dessous dans une partie d'insertion (11b) dudit joint (11) s'étendant vers l'arrière à partir de la partie cylindrique (11a), et lui est soudée.

16. Structure de cadre selon la revendication 14 ou 15, caractérisée en ce que deux tubes latéraux (10) sont disposés sur les deux côtés du tube inférieur (9), une de leurs extrémités étant respectivement insérée dans un tube (11c) érigé sur l'un et l'autre côté dudit joint (11) et soudée à lui, chacun desdits tubes latéraux (10) s'étendant dudit joint (11) en général horizontalement vers l'extérieur, étant coudé d'environ 90° pour s'étendre obliquement en bas vers l'avant, étant coudé de nouveau d'environ 90° pour s'étendre obliquement vers l'arrière, et coudé d'un angle obtus pour s'étendre obliquement en arrière vers le haut, son extrémité arrière étant insérée dans une extrémité avant d'un cadre principal (12) et lui étant fixée.
